# EUROPEAN PATENT APPLICATION

(11) **EP 3 048 695 A1**
(43) Date of publication of application: **27.07.2016**
(21) Application number: 15203187.8
(22) Date of filing: 30.12.2015
(51) Int. Cl.: H02J 7/00, H02M 3/158

(54) **METHOD AND SYSTEM FOR CHARGING/DISCHARGING A BATTERY**

(30) Priority: 20.01.2015 US 201514600926
(71) Applicant: NXP B.V., 5656 AG Eindhoven (NL)
(72) Inventor: JOEHREN, Michael, Redhill, Surrey RH1 1SH (GB); CROSBY, Robert Glenn II, Redhill, Surrey RH1 1SH (GB)
(74) Representative: Hardingham, Christopher Mark

(57) **Abstract**

Embodiments of methods for charging/discharging a battery and DC/DC converter devices for charging/discharging a battery are described. In one embodiment, a method for charging/discharging a battery involves conveying energy from a direct current (DC) power source to the battery through a DC/DC converter device and conveying energy from the battery to the DC power source through the DC/DC converter device. Other embodiments are also described.

## Description

### Background

A constant direct current (DC) voltage can be used to charge a battery to reduce electrical losses and improve battery charging efficiency. Typically, a DC-DC converter device is used to convert a voltage level of a direct current (DC) power source to a charging voltage level suitable for a battery. A DC-DC converter device may be, for example, a Buck DC-DC converter device in which the input voltage is higher than the output voltage, a Boost DC-DC converter device in which the input voltage is lower than the output voltage, or a Buck-Boost DC-DC converter device in which the input voltage is higher or lower than the output voltage.

Periodic battery discharging can be used to improve battery charging efficiency and/or reduce battery overload. In a conventional DC-DC converter device, the discharge of a battery causes some of the energy from a discharge pulse to dissipate into the environment and results in thermal energy/heat. However, thermal management can influence the maximum charging current, which can prolong the charging time. For example, in systems where the charging power is delivered by wireless power receivers (such as used in Wireless Power Consortium (WPC) (Qi), Power Matters Alliance (PMA) or Alliance for Wireless Power (A4WP)), thermal management can affect battery charging efficiency.

### Summary

Embodiments of methods for charging/discharging a battery and DC/DC converter devices for charging/discharging a battery are disclosed. In one embodiment, a method for charging/discharging a battery involves conveying energy from a DC power source to the battery through a DC/DC converter device and conveying energy from the battery to the DC power source through the DC/DC converter device. Other embodiments are also described.

In an embodiment, a DC/DC converter device for charging/discharging a battery include a switching unit having two switches, an inductor connected to a DC power source or the battery through the switching unit, and a switch control device configured to control the two switches to convey energy from the DC power source to the battery and to convey energy from the battery to the DC power source. The battery may comprise a plurality of stacked battery units

In an embodiment, a method for charging/discharging a battery involves charging the battery from a DC power source through an inductor of a DC/DC converter based battery charging device and discharging the battery through the inductor of the DC/DC converter based battery charging device to a decoupling capacitor of the DC power source.

Other aspects and advantages of embodiments of the present invention will become apparent from the following detailed description, taken in conjunction with the accompanying drawings, depicted by way of example of the principles of the invention.

### Brief Description of the drawings

Fig. 1 is a schematic block diagram of a battery charging system in accordance with an embodiment of the invention.
Fig. 2 depicts an embodiment of the battery charging system depicted in Fig. 1 with a DC-DC converter device that acts as a source in Buck mode (from DC power source to battery) and as a sink in Boost mode (from battery to DC power source).
Figs. 3 and 4 illustrate an example of a battery charging cycle of the battery charging system depicted in Fig. 2.
Figs. 5 and 6 illustrate an example of a battery discharging cycle of the battery charging system depicted in Fig. 2.
Fig. 7 depicts an embodiment of the battery charging system depicted in Fig. 1 with a DC-DC converter device that acts as a sink in Boost mode (from DC power source to battery) and as a source in Buck mode (from battery to DC power source).
Figs. 8 and 9 illustrate an example of a battery charging cycle of the battery charging system depicted in Fig. 7.
Figs. 10 and 11 illustrate an example of a battery discharging cycle of the battery charging system depicted in Fig. 7.
Fig. 12 depicts an embodiment of the battery charging system depicted in Fig. 1 with a Buck-Boost DC-DC converter device.
Fig. 13 is a process flow diagram of a method for charging/discharging a battery in accordance with an embodiment of the invention.

Throughout the description, similar reference numbers may be used to identify similar elements.

It will be readily understood that the components of the embodiments as generally described herein and illustrated in the appended figures could be arranged and designed in a wide variety of different configurations. Thus, the following detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment. Rather, language referring to the features and advantages is understood to mean that a specific feature, advantage, or characteristic described in connection with an embodiment is included in at least one embodiment. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment. Thus, the phrases "in one embodiment," "in an embodiment," and similar language throughout this specification may, but do not necessarily, all refer to the same embodiment.

### Detailed Description

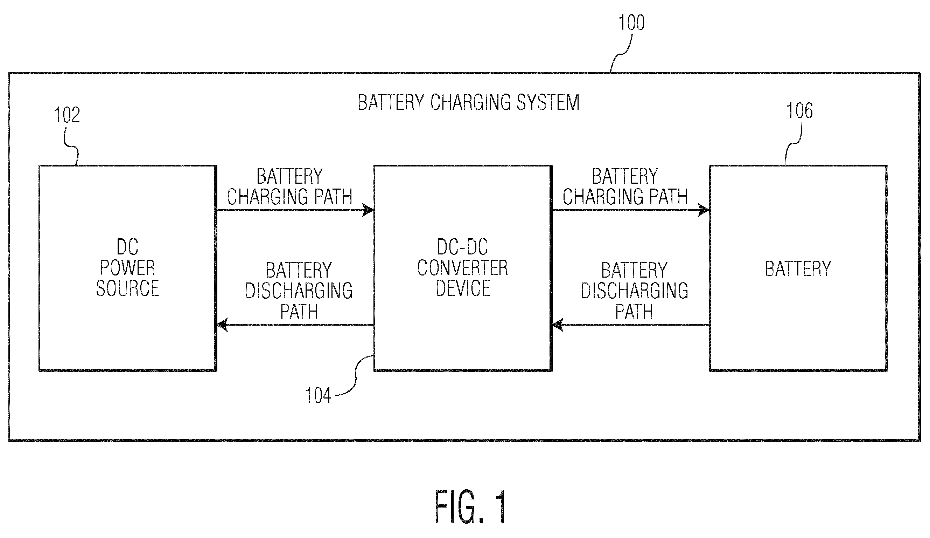

Fig. 1 is a schematic block diagram of a battery charging system 100 in accordance with an embodiment of the invention. In the embodiment depicted in Fig. 1, the battery charging system includes a DC power source 102, a DC-DC converter device 104, and a battery 106. The battery charging system can be used to charge the battery through wired connections or to wirelessly charge the battery. Although the battery charging system is shown in Fig. 1 as including certain components, in some embodiments, the battery charging system includes less or more components to implement less or more functionalities.

In a conventional battery charging system, some of the energy from battery discharging dissipates into the environment and results in thermal energy, which can affect battery charging efficiency and prolong battery charging time. Compared to a conventional battery charging system in which the energy from the battery discharge results in heat dissipated into the environment, the battery charging system 100 captures at least some of the energy from the battery discharge and returns the energy back into the DC power source. Consequently, the battery charging system can use some of the energy from the battery discharge for subsequent battery charging cycles. Compared to a conventional battery charging system in which the energy from the battery discharge results in heat dissipated into the environment, the battery charging system 100 can improve battery charge efficiency and reduce energy loss.

In an example of the operation of the battery charging system 100, energy is conveyed from the DC power source 102 to the battery 106 through the DC/DC converter device 104, e.g., in a battery charging cycle and in another example, energy is conveyed from the battery to the DC power source through the DC/DC converter device, e.g., in a battery discharging cycle.

The DC power source 102 of the battery charging system 100 is configured to provide a DC power signal to charge the battery 106. The DC power source may receive DC energy from an alternating current (AC) to DC converter (not shown), which is connected to an AC outlet (e.g., a wall mount power outlet). The DC power source may receive DC energy from a wireless power transmission source, for example, a WPC compatible wireless power transmission device, a PMA compatible wireless power transmission device and/or an A4WP compatible wireless power transmission device. In an embodiment, the DC power source is a wireless power receiver that includes a coil, a rectifier circuit and a decoupling capacitor.

The DC-DC converter device 104 of the battery charging system 100 is configured to convert a voltage level of the DC power signal from the DC power source 102 to a charging voltage level suitable for the battery 106. In some embodiments, the DC-DC converter device is a Buck DC-DC converter device where the DC voltage level of the DC power source is higher than the charging voltage level suitable for the battery. In some embodiments, the DC-DC converter device is a Boost DC-DC converter device where the DC voltage level of the DC power source is lower than the charging voltage level suitable for the battery. In some embodiments, the DC-DC converter device is a Buck-Boost DC-DC converter device where the DC voltage level of the DC power source may be higher or lower than the charging voltage level suitable for the battery.

In the embodiment depicted in Fig. 1, the DC/DC converter device 104 is configured to convey energy from the DC power source 102 to the battery 106 and to convey energy from the battery to the DC power source. In some embodiment, the DC power source includes a decoupling capacitor and the DC-DC converter either charges the battery or charges the decoupling capacitor. In an embodiment, the DC-DC converter device includes two switches, an inductor connected to the DC power source or to the battery through the two switches, and a switch control device configured to control the two switches to convey energy from the DC power source to the battery and to convey energy from the battery to the DC power source. In some embodiments, a secondary switching converter is used to recuperate the energy of a discharge cycle/pulse.

In some embodiments, the DC-DC converter device 104 operates in a first operational mode (i.e. a charging mode) as a charging path that conveys energy to the battery 106. In the charging mode, energy is conveyed from the DC power source 102 (e.g. an AC/DC converter, a wireless power receiver etc.) to the battery in either a step-down (Buck) configuration if the DC voltage is higher than the battery voltage or a step-up (Boost) configuration if the DC voltage is lower than the battery voltage. In some embodiments, the DC-DC converter device operates in a second operational mode (i.e. a discharging mode) as a discharge path that conveys energy back to the DC power source. In the discharging mode, energy is conveyed from the battery to the DC power source in a Boost mode if the battery voltage is lower than the DC voltage and in a Buck mode if the battery voltage is higher than the DC voltage. By operating the DC-DC converter in two different modes to charge the battery and to convey energy back to the power source, battery discharging energy loss and component count can be reduced. Because the DC-DC converter can operate in two different modes, one mode charging the battery and the other mode discharging the battery, no significant additional components are required. Additional elements to measure the charging/ discharging current can also be used during both cycles.

In an example operational scenario, if 1% of the primary charging energy goes into the battery 106 is discharged during a negative current pulse, the DC-DC converter device 104 reduces the actual loss of energy, resulting in an overall loss of only 0.1 to 0.15%. For a charging power of 10 Watt (W), the losses from discharge pulses are reduced from 100 milliwatt (mW) (when a conventional battery charging system in which the energy from the battery discharging results in heat dissipated into the environment is used) to 10-15 mW. For a charging power of 40 W, the losses from discharge pulses are reduced from 400mW (when a conventional battery charging system in which the energy from the battery discharging results in heat dissipated into the environment is used) to 40-60 mW.

The battery 106 of the battery charging system 100 is configured to store the energy received from the DC power source 102. In some embodiments, the battery is a battery of a portable computing device, such as a cellular phone battery or a tablet computer battery. The battery may be any suitable type of rechargeable battery. Examples of the battery include (without limitation) Lead-acid batteries, Alkaline batteries, Nickel-iron batteries, Nickel-cadmium (NiCd) batteries, Nickel-hydrogen (NiH²) batteries, Nickel-metal hydride (NiMH) batteries, Nickel-zinc (NiZn) batteries, and Lithium-ion (Li-ion) batteries.

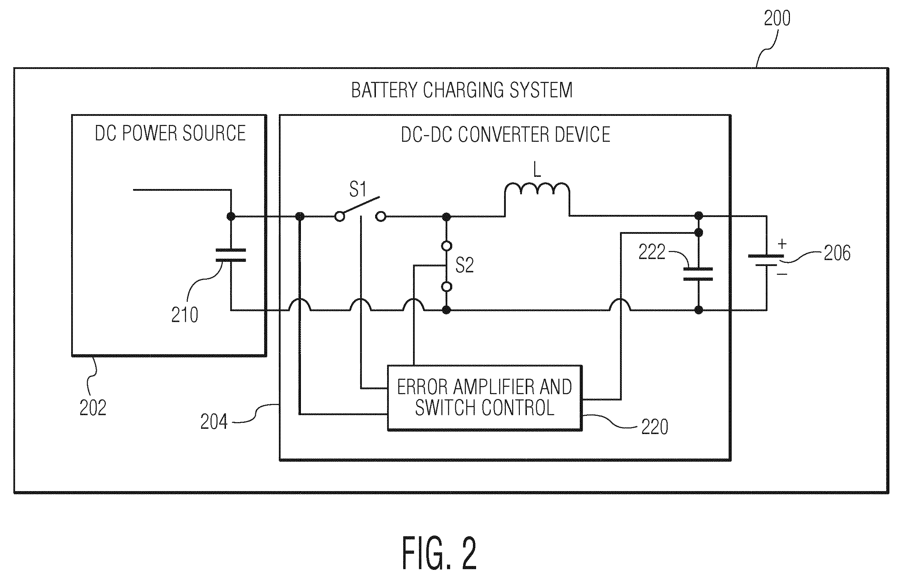

In some embodiments, the DC-DC converter device 104 is a Buck DC-DC converter device where the DC voltage level of the DC power source 102 is higher than the charging voltage level suitable for the battery 106. Fig. 2 depicts an embodiment of the battery charging system 100 depicted in Fig. 1 with a DC-DC converter device that acts as a source in Buck mode (from DC power source to battery) and as a sink in Boost mode (from battery to DC power source). In the embodiment depicted in Fig. 2, the battery charging system 200 includes a DC power source 202, a DC-DC converter device 204, and a battery 206. The battery charging system 200 depicted in Fig. 2 is one possible embodiment of the battery charging system depicted in Fig. 1. However, the battery charging system depicted in Fig. 1 is not limited to the embodiment shown in Fig. 2.

The DC power source 202 of the battery charging system 200 is configured to provide a DC power signal to charge the battery 206. In the embodiment depicted in Fig. 2, the DC power source includes a decoupling capacitor 210 that is used to store charging/discharging energy.

The DC-DC converter device 204 of the battery charging system 200 is configured to convert a voltage level of the DC power signal from the DC power source 202 to a charging voltage level suitable for the battery 206. In the embodiment depicted in Fig. 2, the DC-DC converter device 204 includes a first switch, "S1," a second switch, "S2," an inductor, "L," which is connected to the decoupling capacitor 210 of the DC power source 202 through the first and second switches, "S1," "S2," an error amplifier and switch control device 220, and a capacitor 222 for over-charge protection of the battery. The error amplifier and switch control device is configured to control the first and second switches, "S1," "S2," to convey energy from the DC power source to the battery and to convey energy from the battery to the DC power source. The DC-DC converter device acts as a source (in Buck mode, from the DC power source to the battery) and as a sink (in Boost mode, from the battery to the DC power source). In some embodiments, the DC-DC converter charges the battery during a battery charging cycle or charges the decoupling capacitor during a battery discharging cycle.

The battery 206 of the battery charging system 200 is configured to store the energy received from the DC power source 202. The battery may be a battery of a portable computing device, such as a cellular phone battery or a tablet computer battery. Examples of the battery include (without limitation) Lead-acid batteries, Alkaline batteries, Nickel-iron batteries, NiCd batteries, NiH² batteries, NiMH batteries, NiZn batteries, and Li-ion batteries.

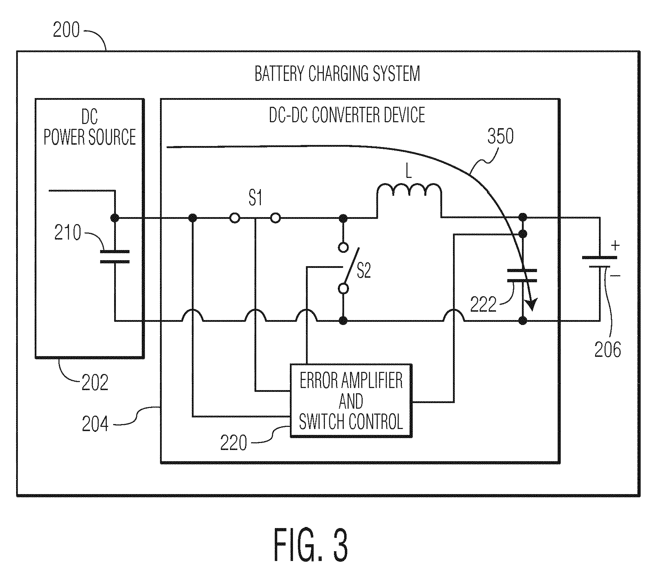

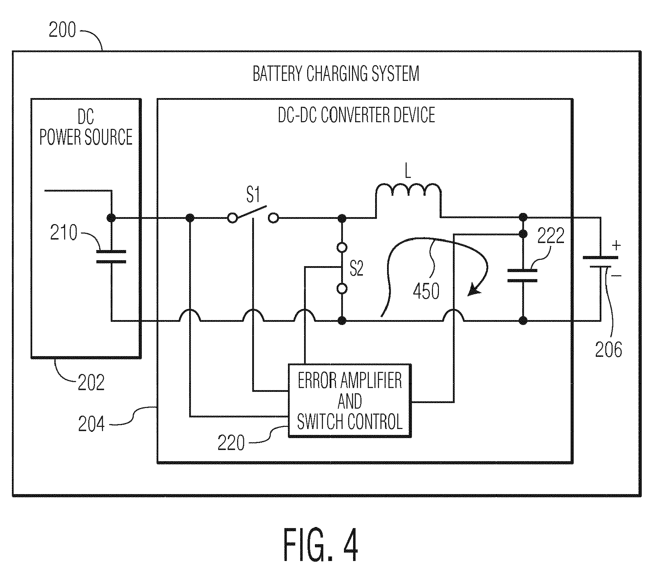

Figs. 3 and 4 illustrate an example of a battery charging cycle of the battery charging system 200. The battery charging cycle is typically used in situations where the DC power source 202 has a higher voltage than the battery 206. For example, the battery charging cycle can be used for a USB connector with a bus voltage of about 5 V and a Li-ion battery with a maximum voltage around or below 4.8 V and the pulse charging maximum voltage in the range of 4V. During the battery charging cycle, the DC-DC converter device 204 operates as a Buck converter in the direction from the DC power source to the battery. As illustrated in Fig. 3 by arrow 350, the inductor, "L," is charged from the DC power source, when the switch, "S1," is closed under the control of the error amplifier and switch control device 220. Subsequently, as illustrated in Fig. 4 by arrow 450, the inductor, "L," transfers its stored energy to the battery, when the switch, "S1," opens and the switch, "S2," is closed under the control of the error amplifier and switch control device. The error amplifier and switch control device can set the DC-DC converter device to deliver a constant voltage or a constant current.

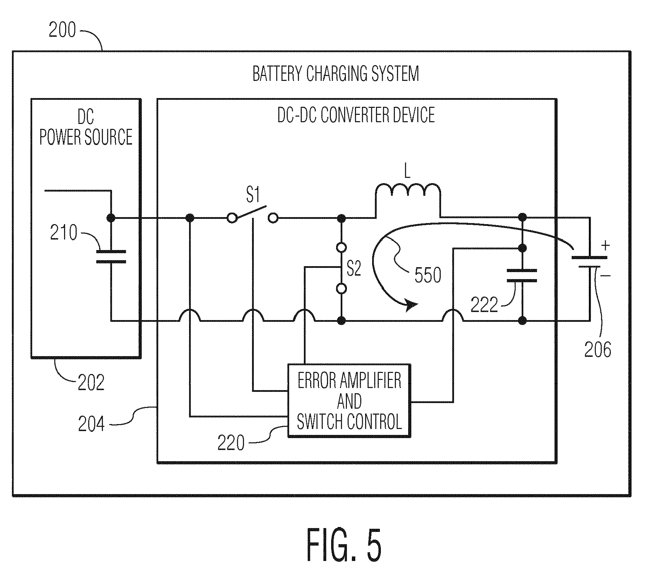

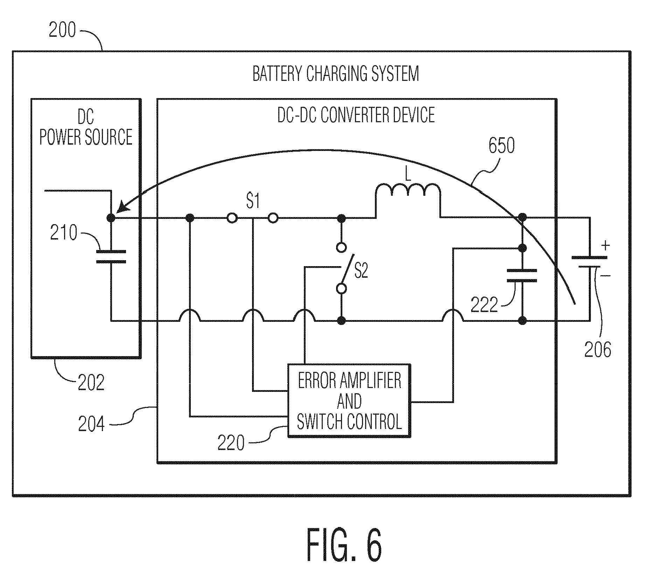

Figs. 5 and 6 illustrate an example of a battery discharging cycle of the battery charging system 200. During the battery discharging cycle, the DC-DC converter device 204 operates as a Boost converter in the direction from the battery 206 to the DC power source 202 and the two switches, "S1," "S2," are operated in an order that is different from the order of the battery charging cycle shown in Figs. 3 and 4. As illustrated in Fig. 5 by arrow 550, the inductor, "L," is first charged with energy when the switch, "S2," is closed. Subsequently, as illustrated in Fig. 6 by arrow 650, the energy stored at the inductor, "L," is discharged back into the DC power source (i.e., stored in the decoupling capacitor 210) when the switch, "S2," is opened and the switch, "S1," is closed under the control of the error amplifier and switch control device 220. During a subsequent battery charging cycle, the battery can be charged using the energy stored in the decoupling capacitor of the DC power source through the DC/DC converter device.

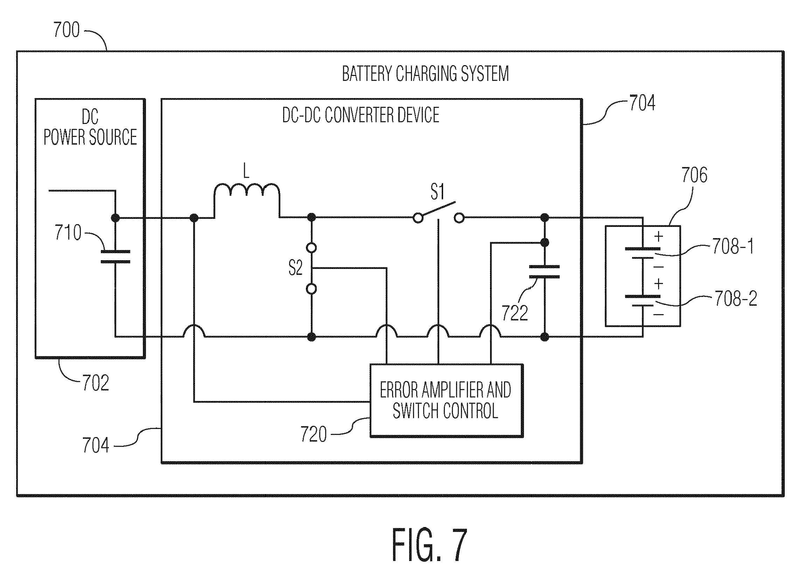

Turning back to Fig. 1, in some embodiments, the DC-DC converter device 104 is a Boost DC-DC converter device where the DC voltage level of the DC power source 102 is lower than the charging voltage level suitable for the battery 106. Fig. 7 depicts an embodiment of the battery charging system 100 depicted in Fig. 1 with a DC-DC converter device that acts as a sink in Boost mode (from DC power source to battery) and as a source in Buck mode (from battery to DC power source). In the embodiment depicted in Fig. 7, the battery charging system 700 includes a DC power source 702, a DC-DC converter device 704, and a battery 706. The battery charging system 700 depicted in Fig. 7 is one possible embodiment of the battery charging system depicted in Fig. 1. However, the battery charging system depicted in Fig. 1 is not limited to the embodiment shown in Fig. 7.

The DC power source 702 of the battery charging system 700 is configured to provide a DC power signal to charge the battery 706. In the embodiment depicted in Fig. 7, the DC power source includes a decoupling capacitor 710.

The DC-DC converter device 704 of the battery charging system 700 is configured to convert a voltage level of the DC power signal from the DC power source 702 to a charging voltage level suitable for the battery 706. In the embodiment depicted in Fig. 7, the DC-DC converter device 704 includes a first switch, "S1," a second switch, "S2," an inductor, "L," connected to the battery through the first and second switches, "S1," "S2," an error amplifier and switch control device 720, and a capacitor 722 for over-charge protection of the battery. The error amplifier and switch control device is configured to control the first and second switches, "S1," "S2," to convey energy from the DC power source to the battery and to convey energy from the battery to the DC power source. The DC-DC converter device acts as a sink (in Boost mode, from the DC power source to the battery) and as a source (in Buck mode, from the battery to the DC power source). In some embodiments, the DC-DC converter charges the battery during a battery charging cycle or charges the decoupling capacitor during a battery discharging cycle.

The battery 706 of the battery charging system 700 is configured to store the energy received from the DC power source 702. In the embodiment depicted in Fig. 7, the battery includes two or more stacked battery units 708-1, 708-2. The battery may be a battery of a portable computing device, such as a cellular phone battery or a tablet computer battery. Examples of the battery include (without limitation) Lead-acid batteries, Alkaline batteries, Nickel-iron batteries, NiCd batteries, NiH² batteries, NiMH batteries, NiZn batteries, and Li-ion batteries.

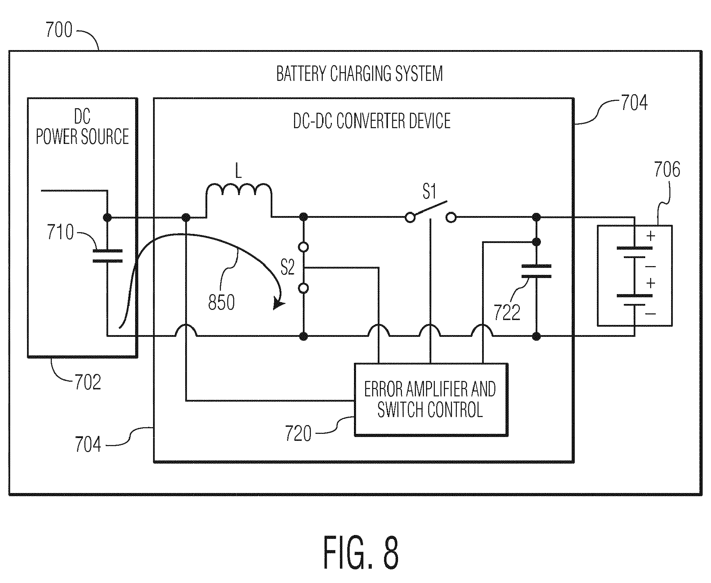

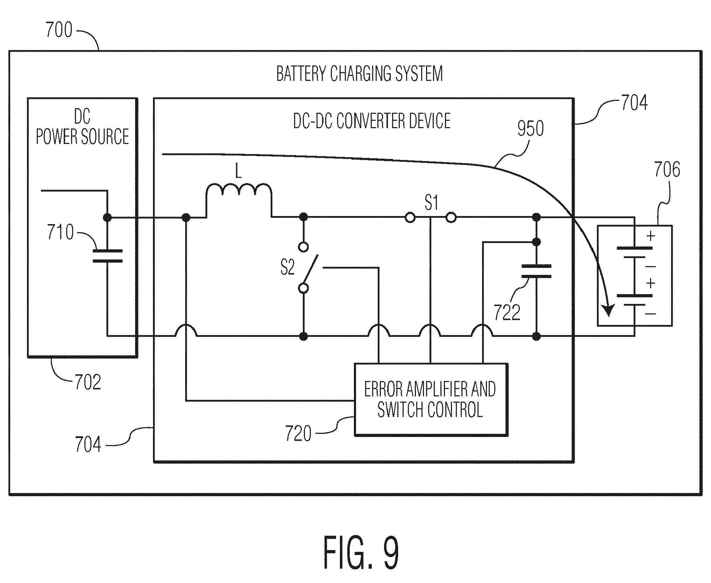

Figs. 8 and 9 illustrate an example of a battery charging cycle of the battery charging system 700. The battery charging cycle is typically used in situations where the DC power source 702 has a lower voltage than the battery 706. For example, the battery charging cycle can be used for a USB connector with a bus voltage of about 5 V and two stacked battery units. During the battery charging cycle, the DC-DC converter device 704 operates as a Boost converter in the direction from the DC power source to the battery. As illustrated in Fig. 8 by arrow 850, the inductor, "L," is charged from the DC power source, when the switch, "S2," is closed under the control of the error amplifier and switch control device. Subsequently, as illustrated in Fig. 9 by arrow 950, the inductor, "L," transfers its stored energy to the battery, when the switch, "S2," opens and the switch, "S1," is closed under the control of the error amplifier and switch control device 720. The error amplifier and switch control device can set the DC-DC converter device to deliver a constant voltage or a constant current.

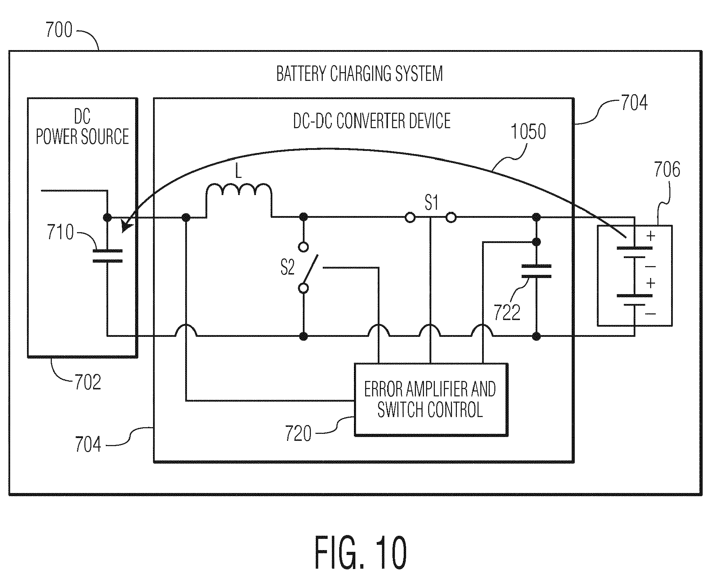

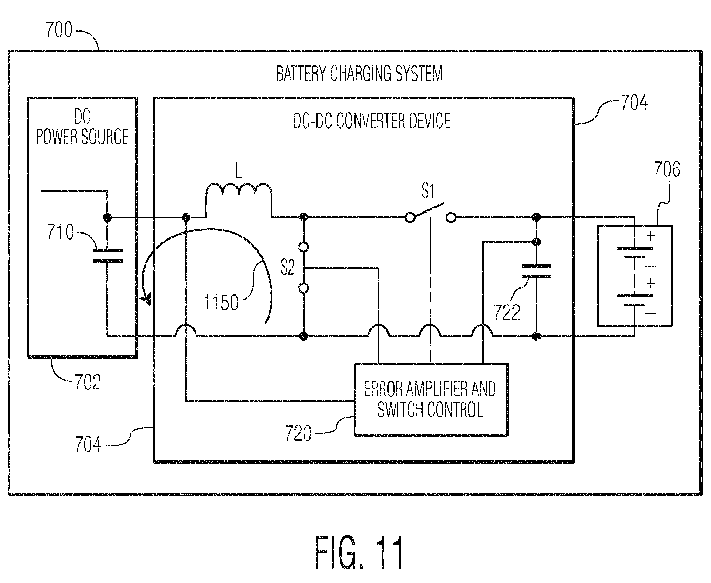

Figs. 10 and 11 illustrate an example of a battery discharging cycle of the battery charging system 700. During the battery discharging cycle, the DC-DC converter device 704 operates as a Buck converter in the direction from the battery 706 to the DC power source 702 and the two switches, "S1," "S2," are operated in different order of the battery charging cycle shown in Figs. 8 and 9. As illustrated in Fig. 10 by arrow 1050, the inductor, "L," is first charged with energy when the switch, "S1," is closed. Subsequently, as illustrated in Fig. 11 by arrow 1150, the energy stored in the inductor, "L," is discharged back into the DC power source (i.e., stored in the decoupling capacitor 710) when the switch, "S1," is opened and the switch, "S2," is closed under the control of the error amplifier and switch control device 720. During a subsequent battery charging cycle, the battery is charged using the energy stored in the decoupling capacitor of the DC power source through the DC/DC converter device.

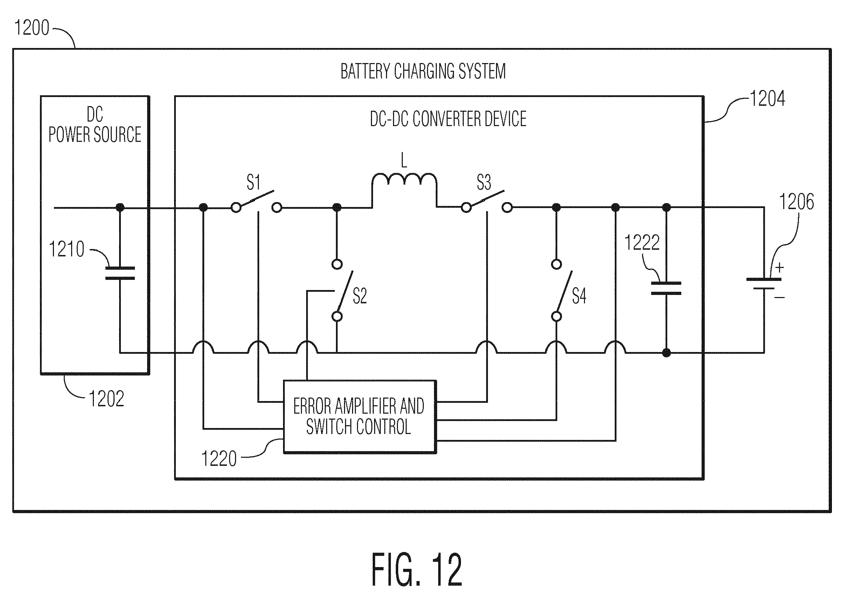

Turning back to Fig. 1, in some embodiments, the DC-DC converter device 104 is a Buck-Boost DC-DC converter device where the DC voltage level of the DC power source 102 is higher than the charging voltage level suitable for the battery 106 in some cases or is lower than the charging voltage level suitable for the battery 106 in other cases. Fig. 12 depicts an embodiment of the battery charging system 100 depicted in Fig. 1 with a Buck-Boost DC-DC converter device. In the embodiment depicted in Fig. 12, the battery charging system 1200 includes a DC power source 1202, a DC-DC converter device 1204, and a battery 1206. The battery charging system 1200 depicted in Fig. 12 is one possible embodiment of the battery charging system depicted in Fig. 1. However, the battery charging system depicted in Fig. 1 is not limited to the embodiment shown in Fig. 12.

The DC power source 1202 of the battery charging system 1200 is configured to provide a DC power signal to charge the battery 1206. In the embodiment depicted in Fig. 12, the DC power source includes a decoupling capacitor 1210.

The Buck-Boost DC-DC converter device 1204 of the battery charging system 1200 is configured to convert a voltage level of the DC power signal from the DC power source 1202 to a charging voltage level suitable for the battery 1206. In the embodiment depicted in Fig. 12, the DC-DC converter device includes a first switch, "S1," a second switch, "S2," a third switch, "S3," a third switch, "S4," an inductor, "L," connected to the DC power source through the first and second switches, "S1,", "S2," and connected to the battery through the third and fourth switches, "S3," "S4," an error amplifier and switch control device 1220, and a capacitor 1222 for over-charge protection of the battery. The error amplifier and switch control device is configured to control the first, second, third, and fourth switches, "S1,", "S2," "S3," "S4," to convey energy from the DC power source to the battery and to convey energy from the battery to the DC power source. The switches, "S1," "S2," "S3," "S4," allow the Buck-Boost DC-DC converter device to act as a Buck or a Boost converter, conveying energy in either direction between the DC power source and the battery, depending on the mode. In some embodiments, the DC-DC converter charges the battery during a battery charging cycle or charges the decoupling capacitor 1210 during a battery discharging cycle.

The battery 1206 of the battery charging system 1200 is configured to store the energy received from the DC power source 1202. The battery may be a battery of a portable computing device, such as a cellular phone battery or a tablet computer battery. Examples of the battery include (without limitation) Lead-acid batteries, Alkaline batteries, Nickel-iron batteries, NiCd batteries, NiH² batteries, NiMH batteries, NiZn batteries, and Li-ion batteries.

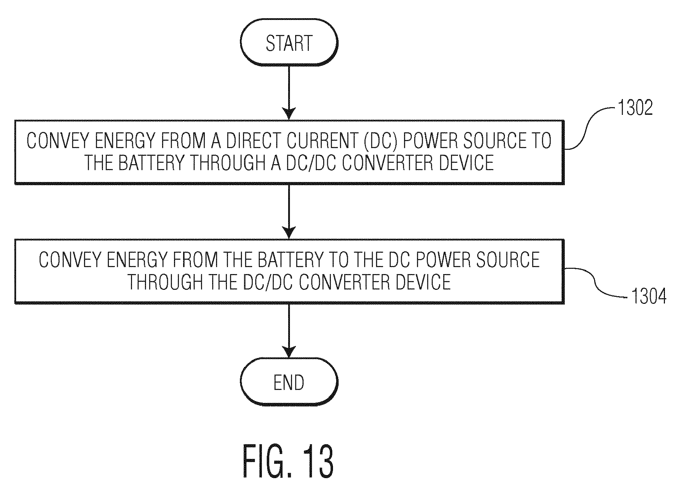

Fig. 13 is a process flow diagram of a method for charging/discharging a battery in accordance with an embodiment of the invention. At block 1302, energy is conveyed from a DC power source to the battery through a DC/DC converter device. At block 1304, energy is conveyed from the battery to the DC power source through the DC/DC converter device. The DC power source may be similar to or the same as the DC power source 102 depicted in Fig. 1, the DC power source 202 depicted in Fig. 2, the DC power source 702 depicted in Fig. 7, and/or the DC power source 1202 depicted in Fig. 12. The DC/DC converter device may be similar to or the same as the DC/DC converter device 104 depicted in Fig. 1, the DC/DC converter device 204 depicted in Fig. 2, the DC/DC converter device 704 depicted in Fig. 7, and/or the DC/DC converter device 1204 depicted in Fig. 12. The battery may be similar to or the same as the battery 106 depicted in Fig. 1, the battery 206 depicted in Fig. 2, the battery 706 depicted in Fig. 7, and/or the battery 1206 depicted in Fig. 12.

Although the operations of the method herein are shown and described in a particular order, the order of the operations of the method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

In addition, although specific embodiments of the invention that have been described or depicted include several components described or depicted herein, other embodiments of the invention may include fewer or more components to implement less or more features.

Furthermore, although specific embodiments of the invention have been described and depicted, the invention is not to be limited to the specific forms or arrangements of parts so described and depicted. The scope of the invention is to be defined by the claims appended hereto and their equivalents.

## Claims

1. A DC/DC converter device for charging/discharging a battery, the DC/DC converter device comprising:
a switching unit comprising two switches;
an inductor connected to a direct current (DC) power source or the battery through the switching unit; and
a switch control device configured to control the two switches to convey energy from the DC power source to the battery and to convey energy from the battery to the DC power source.

2. The DC-DC converter device of claim 1, wherein the DC-DC converter device is a Buck DC-DC converter device, a Boost DC-DC converter device, or a Buck-Boost DC-DC converter device.

3. The DC-DC converter device of claim 1, wherein the DC-DC converter is a Buck DC-DC converter device, wherein the switching unit comprises a first switch and a second switch, wherein the inductor is connected to a decoupling capacitor of the DC power source through the first and second switches, and wherein the switch control device is configured to control the first and second switches to convey energy from the DC power source to the battery and to convey energy from the battery to the DC power source.

4. The DC-DC converter device of claim 1, wherein the DC-DC converter is a Boost DC-DC converter device, wherein the switching unit comprises a first switch and a second switch, wherein the inductor is connected to the battery through the first and second switches, and wherein the switch control device is configured to control the first and second switches to convey energy from the DC power source to the battery and to convey energy from the battery to the DC power source.

5. The DC-DC converter device of claim 1, wherein the DC-DC converter is a Buck-Boost DC-DC converter device, wherein the switching unit comprises a first switch, a second switch, a third switch, a fourth switch, wherein the inductor is connected to the DC power source through the first and second switches and connected to the battery through the third and fourth switches, and wherein the switch control device is configured to control the first, second, third, and fourth switches to convey energy from the DC power source to the battery and to convey energy from the battery to the DC power source.

6. A method for charging/discharging a battery, the method comprising:
conveying energy from a direct current (DC) power source to the battery through a DC/DC converter device; and
conveying energy from the battery to the DC power source through the DC/DC converter device.

7. The method of claim 6, wherein conveying energy from the battery to the DC power source through the DC/DC converter device comprises storing the energy from the battery into a decoupling capacitor of the DC power source.

8. The method of claim 7, further comprising charging the battery using the energy stored in the decoupling capacitor of the DC power source through the DC/DC converter device.

9. The method of claim 6, wherein conveying energy from the DC power source to the battery through the DC/DC converter device comprises conveying the energy from the DC power source to the battery through an inductor of the DC/DC converter device.

10. The method of claim 9, wherein conveying energy from the battery to the DC power source through the DC/DC converter device comprises conveying the energy from the battery to the DC power source through the inductor of the DC/DC converter device.

11. The method of claim 6, wherein the DC-DC converter is a Buck DC-DC converter device, and wherein conveying energy from the DC power source to the battery through the DC/DC converter device comprises converting a DC voltage of the DC power source into a battery voltage that is lower than the DC voltage using the Buck DC/DC converter device.

12. The method of claim 6, wherein the DC-DC converter is a Boost DC-DC converter device, wherein conveying energy from the DC power source to the battery through the DC/DC converter device comprises converting a DC voltage of the DC power source into a battery voltage that is higher than the DC voltage using the Boost DC/DC converter device.

13. The method of claim 12, wherein conveying energy from the battery to the DC power source through the DC/DC converter device comprises converting the battery voltage into the DC voltage.

14. The method of claim 6, wherein the DC-DC converter is a Buck-Boost DC-DC converter device, wherein conveying energy from the DC power source to the battery through the DC/DC converter device comprises converting a DC voltage of the DC power source into a battery voltage that is lower or higher than the DC voltage using the Buck-Boost DC/DC converter device.

15. The method of claim 11 or 14, wherein conveying energy from the battery to the DC power source through the DC/DC converter device comprises converting the battery voltage into the DC voltage.
